Europäisches Patentamt

**European Patent Office**

**Office européen des brevets**

(19)

(11) Publication number: **0 184 054**

A2

(12)

# EUROPEAN PATENT APPLICATION

(21) Application number: **85114544.1**

(22) Date of filing: **15.11.85**

(51) Int. Cl.⁴: **E 01 B 7/00**
**B 65 G 1/04**

(30) Priority: **16.11.84 JP 174136/84 U**

(43) Date of publication of application:
**11.06.86 Bulletin 86/24**

(84) Designated Contracting States:
**CH DE FR GB IT LI**

(71) Applicant: **ELECOMPACK COMPANY LIMITED**
**9-23, Shinjuku 5-chome Shinjuku-ku**
**Tokyo(JP)**

(72) Inventor: **Yamaguchi, Tsuneo**
**9-4, Uchikanda-1-chome**
**Chiyoda-ku Tokyo(JP)**

(72) Inventor: **Harashima, Kiyoshi**
**7-13, Sakaecho-1-chome Hamuramachi**
**Nishitama-gun Tokyo(JP)**

(74) Representative: **Patentanwälte Grünecker, Kinkeldey,**
**Stockmair & Partner**
**Maximilianstrasse 58**
**D-8000 München 22(DE)**

(54) **Rail apparatus.**

(57) A rail apparatus (1) includes rails (TR, LR) each having a running surface (51) and a groove (52) formed on the running surface, both extending in a longitudinal direction of each rail, the running surfaces intersecting with each other on the same plane, whereby a running member (20) having running wheels (30) rotating on the running surfaces can run along the rails, each running wheel having an annular flange (32) which is provided on an outer peripheral tread surface (31) thereof and which is engageable with the grooves of the rails. The rail apparatus further includes an elevation (62) provided on a bottom (53) of the groove (52) at a cross portion of the rails, which come into contact with an outer peripheral surface of the flange of the running wheel upon passing therethrough.

FIG. I

EP 0 184 054 A2

0184054

RAIL APPARATUS

FIELD OF THE INVENTION AND RELATED ART STATEMENT

The present invention relates to a rail apparatus in which rails having in running surfaces thereof grooves extending along the rails are arranged so as to intersect with each other and a running member runs along the rails.

In a rail apparatus of this type, running wheels rotating on running surfaces are rotatably mounted on the associated running member. An annular flange which engages with a groove of each rail for guiding the running wheel is provided on a middle portion, in a widthwise or transverse direcrtion, of an outer peripheral surface of the running wheel to be contacted with the running surface of the rail. The running surface of each rail is interrupted in any direction at the cross portion of the rails, so that separate running members may run in different directions. Such a rail apparatus may be applied to an article reserving warehouse in which a plurality of movable racks each having shelves on which articles are laid cooperate with a movable loader which is movable in a direction perpendicular to the moving direction of the movable rack in loading and unloading the articles onto or from the shelves.

In such a rail apparatus, in a normal running of the running member, its running wheels travel while rotating with outer surfaces thereof being in contact with the running surfaces of the rails. However, when the running member is moved to the cross position of the rails, the outer surfaces of the wheels are disengaged from the running surfaces of the rails whereas outer peripheral surfaces of the flanges are brought into contact with bottoms of the grooves of the rails, or the outer surfaces of the running wheels are brought into contact with edge portions of the cross portion of the rails. Then an axle of the running wheel is lowered by a distance and the running member as a whole is lowered. After passing through the cross portion, the running member is again raised by the distance. Accordingly, whenever the running member passes through the cross portion of the rails, the running member is rocked up and down while being subjected to shocks. This leads to collapsing or break-down of the loaded articles and causes the driver or passenger to feel uncomfortable. Moreover, the travelling speed is limited and a working efficiency will be lowered.

OBJECT AND SUMMARY OF THE INVENTION

Accordingly, an object of the invention is to provide a rail apparatus capable of overcoming the above-noted defects.

To this end, according to the invention, an elevation is provided on a bottom of a groove of a rail cross portion. Accordingly, in a normal running of the running member, outer peripheral surface of each running wheel is in contact with a running surface of the associated rail whereas at the cross portion of the rails, an outer peripheral surface of a flange of each running wheel rides over the elevation. A height of the elevation or an amount of projection of the elevation away from the bottom of the groove is equal to or a little greater than a distance defined between the bottom of the groove of each rail and the outer peripheral surface of the flange of each wheel whereby the running wheels are prevented from rocking in the vertical direction.

The objects, features and advantages of the invention will become more apparent from the following description in conjunction with the accompanying drawings.

BRIEF DESCRIPTION OF THE DRAWINGS

Fig. 1 is a perspective view of a rail cross portion of a rail apparatus in accordance with one embodiment of the invention;

Fig. 2 is a plan view showing the overall rail apparatus shown in Fig. 1;

Fig. 3 is a plan view showing the overall rail apparatus shown in Fig. 2, in which a movable rack and a forklift are arranged;

Fig. 4 is a side view of the rail apparatus shown in Fig. 3;

Fig. 5 is a front view showing the rail apparatus shown in Fig. 3;

Fig. 6 is a front view of a running wheel associated with a prior rail apparatus;

Fig. 7 is a side elevational view of the running wheel shown in Fig. 6;

Fig. 8 is a sectional view taken along the line VIII-VIII of Fig. 1;

Fig. 9 is a front view showing a state in which the running wheel is located at the corss portion shown in Fig. 1;

Fig. 10 is a side view of the running wheel shown in Fig. 9;

Fig. 11 is a front view of a running wheel associated with a rail apparatus according to another embodiment of the invention;

Fig. 12 is a plan view of a cross portion of rails of a rail apparatus according to the third embodiment of the invention;

Fig. 13 is a sectional view taken along the line XIII-XIII of Fig. 12;

Fig. 14 is a plan view of a cross portion of rails of a rail apparatus according to the fourth embodiment of the invention;

Fig. 15 is a sectional view taken along the line XV-XV of Fig. 14;

Fig. 16 is a perspective view of a threaded bar member shown in Fig. 15;

Fig. 17 is a perspective view of a mushroom shaped member shown in Fig. 18; and

Fig. 18 is a sectional view of a cross portion of rails of a rail apparatus according to the fifth embodiment of the invention.

DETAILED DESCRIPTION OF PREFERRED EMBODIMENTS

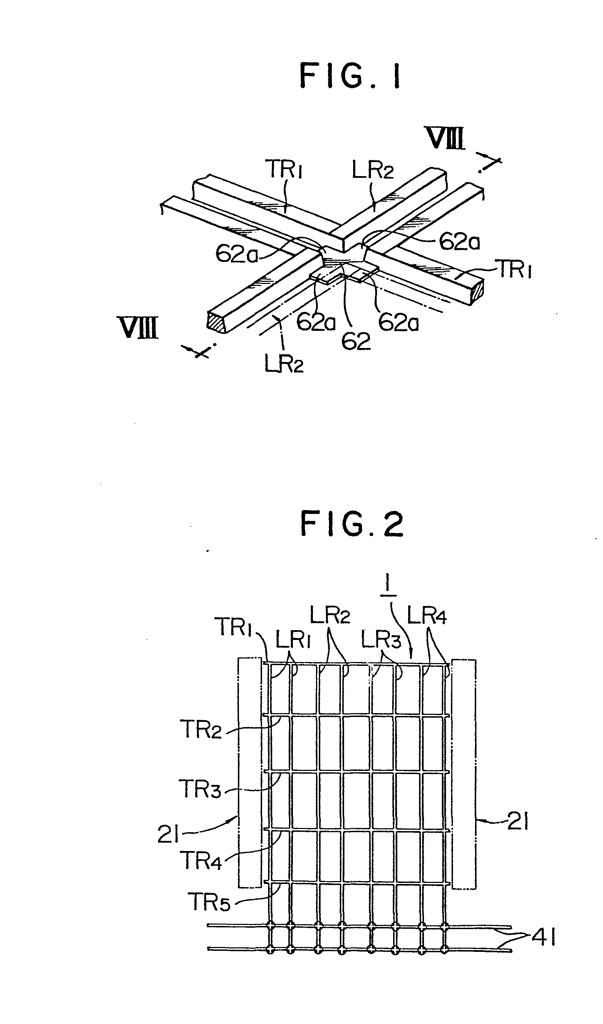

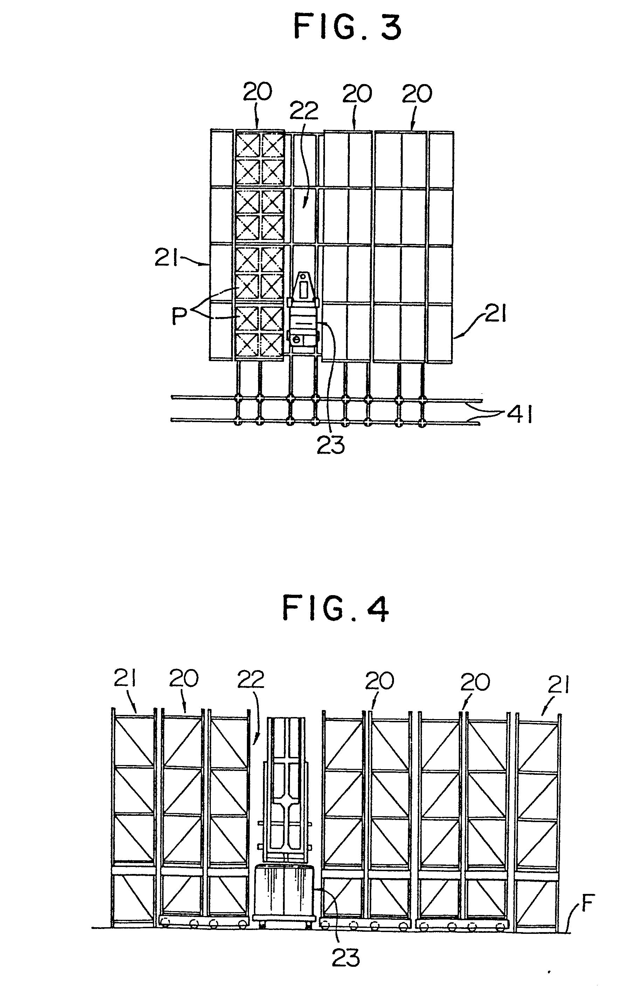

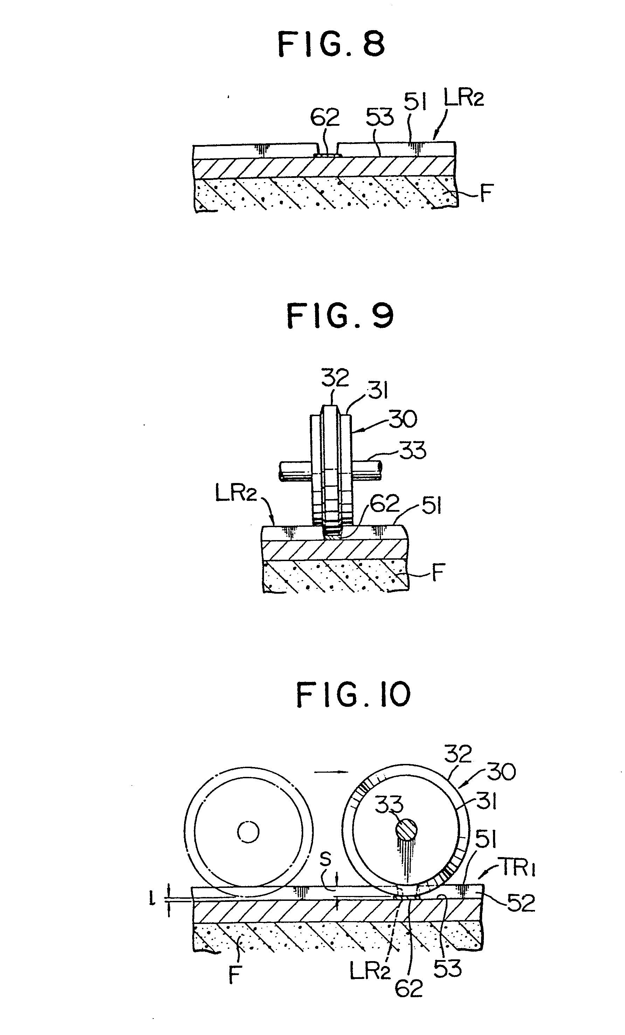

Fig. 1 shows a cross portion of a rail apparatus 1 shown in Fig. 2, which rail appratus 1 has 5 (five) transverse rails $TR_i$ (i = 1 to 5) extending in a transverse direction and 4 (four) pairs of longitudinal rails $LR_i$ (i = 1 to 4) extending in a longitudinal direction perpendicular to or intersecting with the transverse rails TRi. A groove is formd in a running surface of each rail to extend along an axis of each rail. A surface of a floor F and the running surfaces are included in the same horizontal plane. Three rows of movable racks 20 each having a plurality of shelves S on which articles or pallets P are to be laid are disposed on the transverse rails TR, as shown in Figs. 3 to 5. As shown in Fig. 9, running wheels which rotate on the running surfaces of the rails are provided through exles on each rack. In each wheel 30, a flange 32 for engaging with the groove of the rail and for guiding the running of the rack is provided in a middle portion, in the transverse direction, of the outer peripheral tread surface 31 of the running wheel 30 contacting with the running surface 51 of the rail. The running wheels rotate on the running surfaces of the rails so that each rack may move along the transverse rails TR. Reference numeral 21 denotes stationary racks fixed to the floor F. By displacing the movable rack 20, a passage 22 may be appeared between the adjacent racks 20 and 20, or 20 and 21. Accordingly a loader such as a forklift 23 which is of the type running along or on the rails, can run through the passage between the racks along with one pair of longitudinal rails $LR_i$. Also on a bottom portion of the forklift 23, there are provided the same wheels as those of the racks 20. The forklift may move through the passage. The forklift 23 is moved to a position in front of desired shelves and thereafter pallets P are loaded or unloaded, the forklift is turned back to the pair of running rails 41. The forklift 23 changes its running direction by a suitable means and runs along the rails 41 to a next working position.

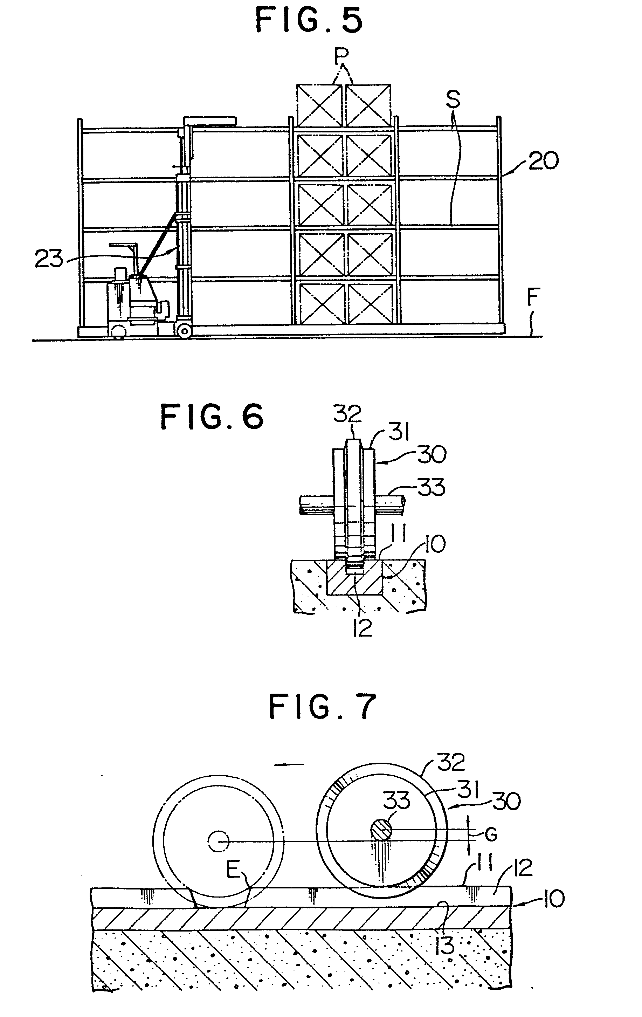

In a prior rail apparatus, as shown in Figs. 6 and 7, when the running wheel 30 is moved to the rail cross portion (in a direction indicated by the arrow), the outer peripheral tread surface 31 is disengaged from the running surfaces 11. As indicated by dot and dash lines in Fig. 7, the outer peripheral surface of the flange 32 comes into contact with a bottom 13 of the groove 12 of the rail 10 or otherwise the outer peripheral tread surface 31 is brought into contact with edge portion E of the groove 12 at the cross portion. As a result, the axle 33 of the running wheels 30 is lowered by a distance G and the movable rack 20 as a whole is lowered. After passing through the cross portion, the movable rack is again raised by the distance G. Therefore, whenever the movable rack passes through the cross portion, it is subjected to rocking motions and shocks.

However, according to the present invention, as shown in Figs. 1, 8 and 9, a shim member 62 is provided on a bottom 53 of a groove 52 at a cross portion between the transverse rail $TR_1$ and each longitudinal rail $LR_2$ to form an elevation. The shim member 62 has a substantially rectangular shape (including a square shape in the case where the cross rails have the same groove width) and extensions 62a engaging with grooves. The shim member 62 is secured to the bottom of the groove at the cross portion by striking, adhesives or the like (see Fig. 1). A thickness of the shim member 62 is substantially equal to or a little greater than a spacing $\ell$ between the

flange 32 of the running wheel 30 and the bottom 53 of the rail groove 52 (see Fig. 10). With such an arrangement, as shown in Figs. 9 and 10, the running wheel 30 of the movable rack rotates with the outer peripheral surface of the flange 32 rides over the shim portion 62 prior to the disengagement of the outer peripheral tread surface 31 from the running surface 51 of the rail. The movable rack runs with the outer peripheral surface of the flange 32 being in contact with the surfaces of the shim members 62. When the outer peripheral surface of the flange 32 is disengaged from the shim member 62 after the wheel has passed through the cross portion, the running wheel rotates and runs again on and along the running surface 51. Accordingly, there is no vertical rocking movement upon passing through the cross portions. This advantage is also available for the movement of the forklift.

As is apparent from the foregoing description, since the above-described advantage is attained solely by providing the shim members at the rail cross portions, the present invention is readily applicable in low cost to a conventional rail apparatus including in combination grooved rails and flanged running wheels.

Also, as is apparent from the foregoing description, the rails intersecting with each other do not always have to have the same dimension (width of the running surface, width of the grooves and the like) and the running wheels of both of the movable racks and the forklift do not always have to have the same dimension (outer diameter, width of the flanges, width of outer peripheral tread surfaces and the like).. It is just necessary to meet the condition that the running surfaces of the rails intersecting with each other are included in the same plane, that is, kept at the same level and each wheel of both running members has the same projecting dimension (dimension S in Fig. 10) of the flange from the outer peripheral tread surface.

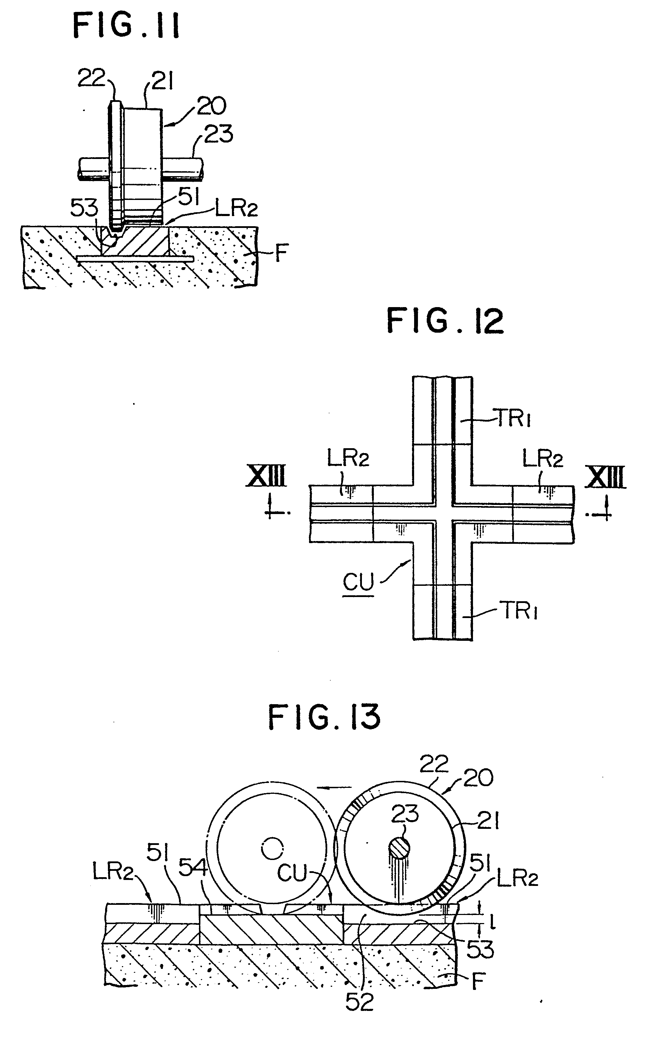

It is apparent that the running wheels running on the grooved rails are not limited to those having flanges in the middle, in the transverse direction, of the wheels but the present invention may be applied to a flanged wheel having a flange at a side thereof as shown in Fig. 11.

Furthermore, the present invention may be applied not only to the embodiment in which the rails are arranged to intersect with each other at a right angle but also a case where rails are arranged to obliquely intersect with each other. Briefly, the shim member is provided at a position where the shim member may be in contact with the outer peripheral surface of the flange of each running wheel prior to the disengagement of the outer circumferential tread surfaces of each running wheel from the running surfaces of the associated rail.

- 10 -

0184054

Although, in the foregoing embodiments, the shim members are provided at the cross portions of rails to provide elevations, it is possible to provide an integrated elevated cross portion instead of the shim member. For instance, as shown in Figs. 12 and 13, a replacable separate cruciform cross portion unit CU is arranged between rails $TR_1$ and $LR_2$ so that the bottom 54 of the groove of the cross portion unit CU is elevated from the bottom 53 of the groove 52 by a dimension $\ell$ equivalent to the thickness of the above-described shim member. Thus, the same advantage as described before may be obtained. In the embodiment shown in Figs. 12 and 13, the elevated bottom 54 not only in the vicinity of the cross portion but also over the overall cross portion unit CU. Such expansion of the elevated bottom 54 not only in the vicinity of the cross portion but also up to a portion somewhat remote from the cross portion may be provided as desired.

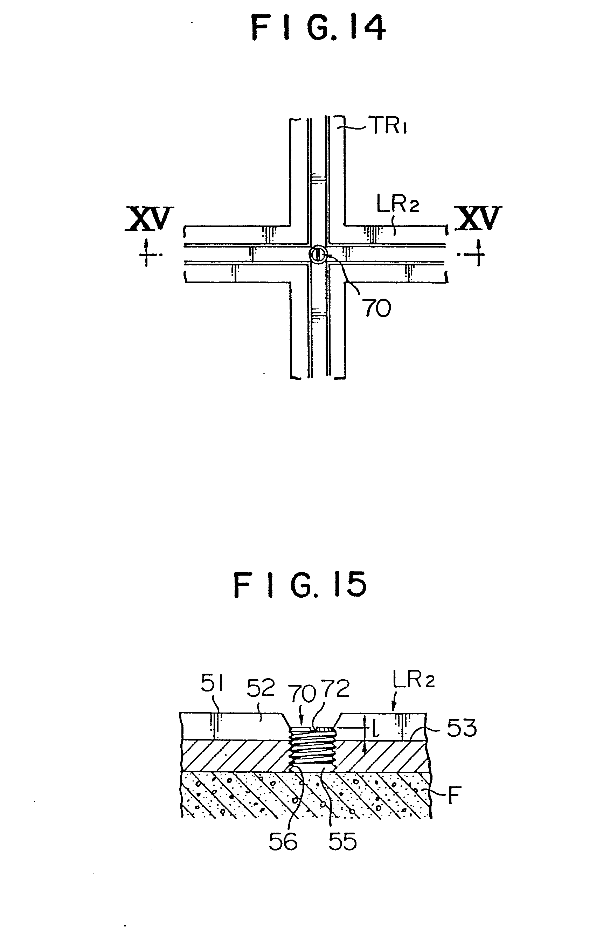

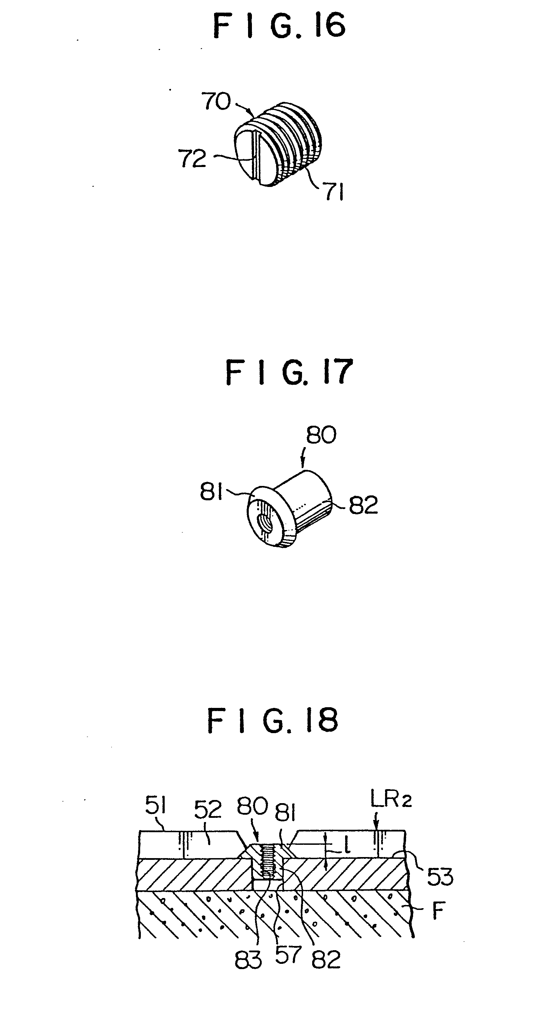

In an embodiment shown in Figs. 14 and 15, a cylindrical bar member is used instead of the shim member. The bar member 70, as shown in Fig. 16, is provided on the outer periphery thereof with a threaded portion 71. The bar member 70 is also provided on one top end thereof with a diametrical groove 72 which cooperates with a driving tool (not shown) for driving the bar member 70. A peripheral portion of the one top end of the bar member 70 is tapered. On the bottom 53 of the groove 52 in the cross portion of the rails there is, as shown in Fig. 15, formed a recess 55 which is provided on an inner periphery thereof with a threaded portion 56 engageable with the threaded portion 71 of the bar member 70. According to this embodiment, an amount $\ell$ of projection of the bar member 70 away from the bottom 53 of the groove 52 is adjustable, so that it can be aplicable to various movable racks.

Furthermore in the still another embodiment, a mushroom shaped member 80 is used. The mushroom shaped member 80 consists of an enlarged truncated cone portion 81 and a stem 82 attached to the enlarged truncated cone portion 81. The stem 82 is closely or loosely replacably inserted into a recess 57 formed on the bottom 53 of the groove 52 in the cross portion of the rails. Various movable racks can run over through the cross portions of the rails without rocking movements thereof by means of using various mushroom shaped members each having an enlarged truncated cone portion an axial length of which is different from each other. The mushroom member 80 is provided therein with an axial threaded bore 83. The threaded bore 83 is capable of engaging with tool for pulling up the mushroom member 80.

It is apparent that the present invention is not limited to the application to the reserving installation composed of movable racks and a loader but

0184054

is applicable to any other facilities in which a running member with wheels must turn at the cross portion.

WHAT IS CLAIMED IS:

1.        In a rail apparatus including rails each having a running surface and a groove formed on said running surface, both extending in a longitudinal direction of said each rail, the running surfaces intersecting with each other on the same plane, whereby a running member having running wheels rotating on the running surfaces is adapted to run along the rails, each running wheel having an annular flange which is provided on outer peripheral tread surface thereof and which is engageable with said groove, said rail apparatus comprising an elevation provided on a bottom of the groove at a cross portion of the rails, which comes into contact with an outer peripheral surface of said flange of said running wheel upon passing therethrough.

2.        A rail apparatus according to Claim 1, wherein said elevation comprises a separate member which is mounted on the bottom of the groove at the cross portion of the rails.

3.        A rail apparatus according to Claim 2, wherein said separate member is a shim.

4.        A rail apparatus according to Claim 1, wherein said elevation is integral with the bottom of the groove.

5.        A rail apparatus according to Claim 1, wherein an amount of projection of said elevation away from the bottom of the groove in said cross portion is adjustable.

6.      A rail apparatus according to Claim 5, wherein said elevation includes a round bar member an outer periphery of which is provided with a threaded portion, and wherein said round bar member is detachably screwed into a recess formed on the bottom of the groove in said cross portion, an inner periphery of which is provided with a complementary threaded portion.

7.      A rail apparatus according to Claim 2, wherein said elevation includes a mushroom shaped member having a stem and an enlarged truncated cone attached to one axial end thereof, and wherein said stem has a cross sectional shape complementary to a cross section shape of a recess formed on the bottom of the groove in said cross portion, so that the mushroom shaped member is replacablly received within said recess.

8.      A rail apparatus according to Claim 5, wherein said elevation includes a mushroom shaped member having a stem and an enlarged truncated cone attached to one axial end thereof, and wherein said stem has a cross sectional shape complementary to a cross section shape of a recess formed on the bottom of the groove in said cross portion, so that the mushroom shaped member is replacablly received within said recess.

9.      A rail apparatus according to Claim 7, wherein said stem has a cuircular cross section.

## FIG. 1

## FIG. 2

# FIG. 3

# FIG. 4

# FIG. 5

# FIG. 6

# FIG. 7

# FIG. 8

# FIG. 9

# FIG. 10

# FIG.11

# FIG.12

# FIG.13

# F I G. 14

TR₁

LR₂

XV

XV

70

# F I G. 15

51  52  70 72  LR₂

L

53

F

56  55

# F I G. 16

# F I G. 17

# F I G. 18